# FASCICULE DE BREVET EUROPEEN

(11) **EP 2 100 655 B1**
(45) Date de publication et mention de la délivrance du brevet: **30.11.2011**
(21) Numéro de dépôt: 09290141.2
(22) Date de dépôt: 27.02.2009
(51) Int. Cl.: B01D 35/30

(54) **Filtre à cartouche pour aéronef**
Filter mit Filtereinsatz für Flugzeug
Cartridge filter for aircraft

(30) Priorité: 14.03.2008 FR 0801409
(43) Date de publication de la demande: 16.09.2009
(73) Titulaire: Messier-Bugatti-Dowty, 78140 Velizy Villacoublay (FR)
(72) Inventeur: Treyz, Alain, 92160 Antony (FR)
(74) Mandataire: Parzy, Benjamin Alain

(56) Documents cités:
- US-A- 3 080 972
- US-A- 3 283 907
- US-A- 5 711 872
- US-A1- 2004 217 045

## Description

### ARRIERE-PLAN DE L'INVENTION

On connaît des dispositifs de filtrage pour circuit hydraulique d'aéronef comportant au moins un filtre à cartouche qui est rapporté de façon démontable sur un bloc hydraulique. Le filtre comporte une cuve qui reçoit une cartouche de filtrage. La cuve est vissée sur le bloc hydraulique et est serrée avec un couple suffisant pour assurer la tenue en service du filetage, et notamment éviter tout fretting.

Compte tenu des dimensions des aéronefs envisagés, les cuves atteignent des dimensions appréciables, de sorte que le couple de serrage augmente en proportion, ce qui pose divers problèmes. D'une part, la mise en place d'un tel couple entraîne l'usage de clés dynamométriques de taille et de poids importants, difficiles à manipuler, surtout dans des zones parfois peu accessibles des soutes de l'aéronef. Ces clés obligent en outre l'opérateur à développer des efforts importants. D'autre part, un tel couple de serrage conduit à des contraintes importantes sur le taraudage du bloc hydraulique. Compte tenu du cyclage en fatigue provoqué par les divers vissages et revissages de la cuve, ces contraintes importantes constituent un risque de dégradation du taraudage du bloc hydraulique. Ces risques sont aggravés par le fait que le bloc hydraulique est généralement réalisé dans des matériaux comme l'aluminium ou le titane dans lesquels les taraudages sont connus pour s'user rapidement, même en prévoyant des traitements de protection.

Le document US 2004/0217045 Al divulgue un dispositif de filtrage comportant un bloc hydraulique recevant un filtre amovible vissé dans un premier taraudage dudit bloc hydraulique, ledit bloc hydraulique comportant également un deuxième taraudage coaxial au premier taraudage qui reçoit un organe de distribution.

### OBJET DE L'INVENTION

L'invention a pour objet un dispositif de filtrage ne présentant pas l'inconvénient précité.

### BREVE DESCRIPTION DE L'INVENTION

On propose un dispositif de filtrage comprenant un bloc hydraulique recevant un filtre amovible vissé dans un premier taraudage du bloc hydraulique. Selon l'invention, on dispose dans le bloc hydraulique un organe de retenue adapté à retenir axialement le filtre lorsque celui-ci est vissé sur le bloc hydraulique, le bloc hydraulique ayant un deuxième taraudage coaxial au premier taraudage qui reçoit un organe de fixation de l'organe de retenue sur le bloc hydraulique.

Le deuxième taraudage qui sert à fixer l'organe de retenue peut alors être soumis à un serrage important, car, dans la mesure où l'organe de retenue est destiné à rester à demeure sur le bloc hydraulique, ce taraudage n'est pas soumis à des vissages et des dévissages fréquents, ce qui lui évite de subir une détérioration de fatigue. Quant au premier taraudage sur lequel se visse le filtre, il ne subit plus d'effort de serrage important, puisque le filtre est retenu axialement par l'organe de retenue de sorte que le filtre ne risque pas de se désolidariser du bloc hydraulique, même s'il n'est pas serré sur le bloc hydraulique.

On sépare donc les effets du serrage d'une part, qui induit des efforts importants mais qui est appliqué à une liaison qui n'est jamais démontée en service, et les effets des vissages/dévissages de la cuve, qui s'appliquent maintenant à une liaison qui est certes démontée souvent en service, mais qui ne subit que très peu d'efforts. Les deux taraudages sont ainsi préservés et peuvent durer nettement plus longtemps qu'un taraudage soumis à des vissages/dévissages fréquents avec serrage important.

Par les termes axial, axialement, on se réfère naturellement à l'axe autour duquel tourne l'élément à visser sur le bloc hydraulique lors de ses vissages/dévissages.

Selon un agencement préféré, le taraudage qui reçoit l'organe de fixation est le même que le taraudage qui reçoit le filtre, l'organe de fixation étant logé en fond de taraudage, tandis que le filtre est vissé en entrée de taraudage. Ainsi, un seul taraudage permet de remplir les deux fonctions de fixation de l'organe de retenue et de réception du filtre, ce qui simplifie la conception du bloc hydraulique.

### BREVE DESCRIPTION DES DESSINS

L'invention sera mieux comprise à la lumière de la description qui suit en référence aux figures des dessins annexés parmi lesquelles :
- la figure 1 est une figure en coupe du dispositif de filtration selon un mode particulier de réalisation de l'invention, le filtre étant sur le point d'être vissé au bloc hydraulique ;
- les figures 2 et 3 sont des vues analogues à la figure 1, illustrant des étapes ultérieures de la mise en place du filtre sur le bloc hydraulique ;
- la figure 4 est une vue analogue à la figure 1 illustrant le filtre en place sur le bloc hydraulique ;
- la figure 5 est une vue analogue à celle de la figure 1 illustrant une variante de réalisation.

### DESCRIPTION DETAILLEE DE L'INVENTION

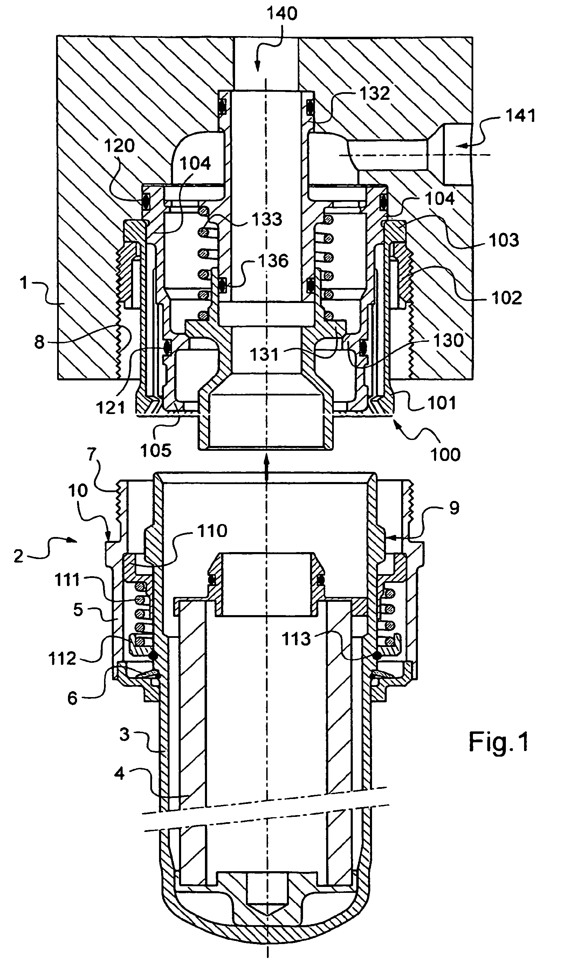

La figure 1 illustre un bloc hydraulique 1 sur lequel un filtre hydraulique 2 est rapporté. Le filtre 2 comporte une cuve 3 qui reçoit une cartouche de filtrage 4 qu'il faut changer régulièrement. Le filtre est donc prévu amovible.

Le filtre 2 comporte une virole 5 qui s'étend autour de la cuve 3 et qui est axialement bloquée par rapport à celle-ci par une rondelle ressort 6. Cependant, la rondelle ressort 6 n'empêche pas la virole 5 de tourner vis-à-vis de la cuve 3. La virole 5 comporte un filetage 7 destiné à être vissé sur un taraudage 8 du bloc hydraulique 1.

Un organe de retenue 100 permet de retenir axialement le filtre 2 lorsque celui-ci est vissé sur le bloc hydraulique 1. L'organe de retenue 100 comporte une griffe 101 qui est fixée sur le corps par un écrou 102 serré au fond du taraudage 8 avec un couple suffisant assurer une tenue mécanique en service du filetage et notamment éviter tout fretting, donc en pratique avec un couple conséquent. De façon connue en soi, la griffe 101 comporte une pluralité de doigts flexibles terminés par des crochets destinés à coopérer avec un redan 9 de la cuve 3. La griffe 101 a une base 103 qui est plaquée contre un épaulement du bloc hydraulique 1 et qui saille de cet épaulement de façon à retenir un guide 104 dans une cavité coaxial du bloc hydraulique 1. Le guide 104 comporte une paroi circulaire cylindrique 105 qui s'étend pour recevoir et guider axialement l'extrémité de la cuve 3 qui vient recouvrir la paroi de guidage 105 lors de la mise en place du filtre sur le bloc hydraulique 1. La paroi de guidage 105 s'étend en regard des doigts de la griffe 101.

De son côté, le filtre est équipé d'un verrou 110 prenant la forme d'une bague étagée coulissant sur l'extérieur de la cuve 3, et destiné à empêcher, une fois le filtre en place, que les doigts de la griffe 101 ne s'écartent et ne libèrent axialement le filtre 2. Le verrou 110 est repoussé par un ressort 111 qui prend appui sur une coupelle 112 arrêtée sur la cuve 3 par un jonc 113. Lorsque le filtre 2 n'est pas monté sur le bloc hydraulique 1, le ressort 111 repousse le verrou 110 qui vient prendre appui sur un épaulement de la virole 5 pour repousser celle-ci en appui contre la rondelle ressort 6, tel que cela est visible à la figure 1.

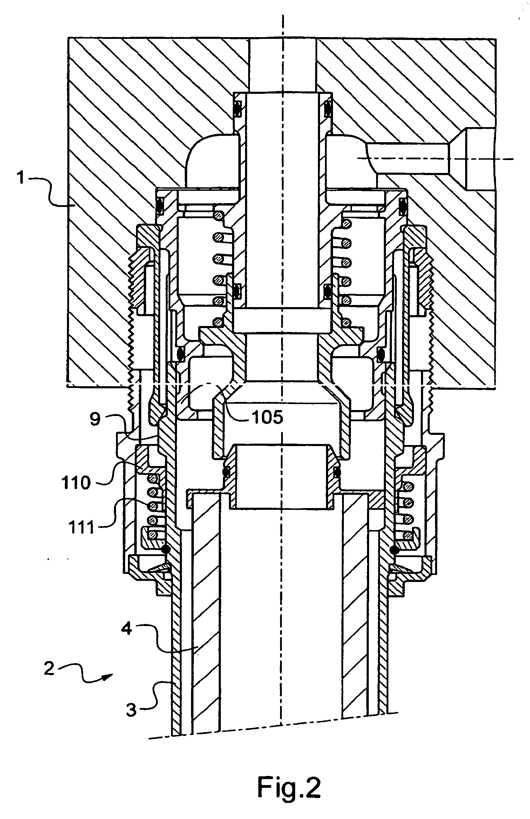

On va maintenant détailler la mise en place du filtre sur le bloc hydraulique 1. Tout d'abord, comme cela est illustré à la figure 2, on approche le filtre du bloc hydraulique 1 et on commence à visser la virole 5 sur le taraudage 8 du bloc hydraulique 1. La cuve 3, qui ne tourne pas, s'engage alors sur la paroi de guidage 105 du guide 104 et est ainsi guidée axialement. Le vissage de la virole 5 se poursuit jusqu'à ce que les crochets des doigts de la griffe 101 viennent en butée contre le redan 9 de la cuve 3.

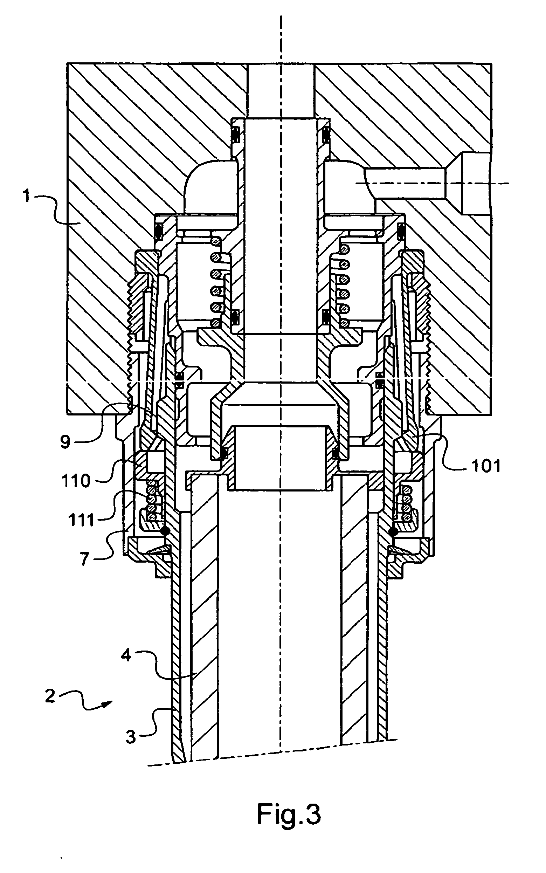

Puis, continuant le vissage, comme cela est visible à la figure 3, les doigts de la griffe s'écartent pour laisser passer le redan 9 tout en formant un obstacle sur lequel le verrou 110 vient buter. Le vissage va donc provoquer une compression du ressort 111 puisque le verrou 110 ne peut plus accompagner la cuve 3 dans sa progression axiale.

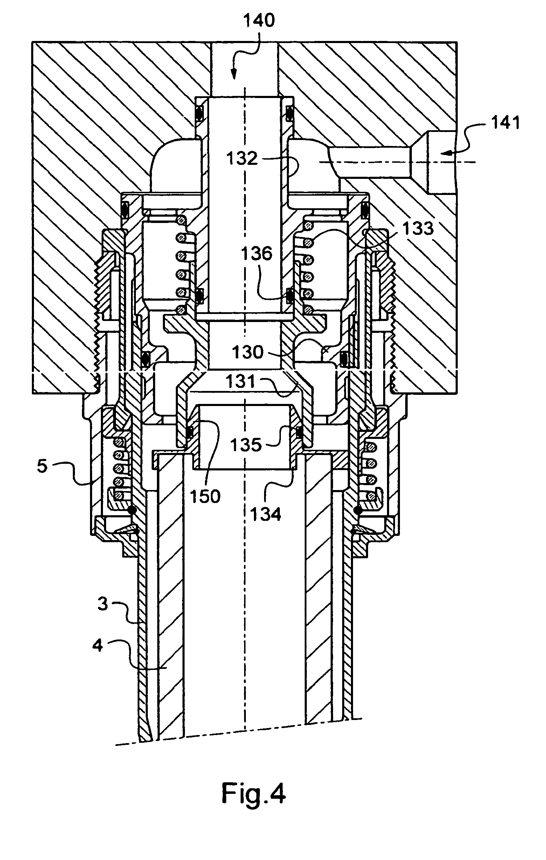

Lorsque, comme cela est illustré à la figure 4, le redan 9 a dépassé les crochets de la griffe 101, les doigts de la griffe 101 reviennent en position non fléchie de sorte que les crochets d'extrémité emprisonnent le redan 9, ce qui laisse la possibilité au verrou 110, poussé par le ressort 111 de coiffer les crochets de la griffe 101, de sorte que les doigts de la griffe ne peuvent plus s'écarter. Le filtre 2 est alors immobilisé axialement sur le bloc hydraulique 1. Il ne reste plus qu'à finir le vissage de la virole 5 de sorte que son redan 10 vienne en en butée contre le bloc hydraulique 1. Un léger serrage suffit.

On remarquera que dans cette position, la rondelle ressort 6 est en flexion et ainsi absorbe les jeux axiaux de montage nécessaires à la mise en place du filtre 2 sur le bloc hydraulique 1.

Même si la virole 5 se dévissait en service, la cuve 3 du filtre serait retenue axialement par la griffe 101, et la virole 5 serait axialement arrêtée par le verrou 110 sur laquelle elle viendrait buter. Il n'y a donc aucun risque de désolidarisation du filtre en service.

On remarquera qu'ici, le taraudage 8 du bloc hydraulique 1 reçoit l'écrou 102 de fixation de la griffe 101 de l'organe de retenue 100. L'écrou 102 est serré en fond de taraudage, ce qui induit des efforts importants dans le taraudage. Cependant, cet écrou 102 n'est normalement jamais démonté en service. En entrée du même taraudage 8, la virole 5 est vissée pour former une liaison qui subit de nombreux vissages et dévissages en service. Cependant, la virole 5 n'est que légèrement serrée, de sorte que ces vissages/dévissages nombreux ne risquent pas de détériorer le taraudage 8.

On notera que l'étanchéité de la liaison entre le bloc hydraulique 1 et le filtre 2 est assurée d'une part par un joint 120 disposé entre la base du guide 104 et le bloc hydraulique 1. et d'autre part par un joint 121 disposé sur la paroi de guide 105 pour coopérer avec la cuve 3. Ces deux joints empêchent tout écoulement de fluide hydraulique à l'extérieur, et en particulier sur l'organe de retenue 100.

Pour démonter le filtre 2, il suffit de dévisser la virole 5. Celle-ci commence par entraîner le verrou 110 vers le bas, en comprimant le ressort 111. Lorsque le verrou est suffisamment descendu, il dégage les crochets de la griffe, puis vient en butée sur la coupelle 112, qui, en appuyant sur le jonc 113, contribue à la descente de la cuve 3. Sous la poussée du ressort, la cuve 3 continue à descendre, son redan 9 écartant les crochets de la griffe 101. Il suffit dès lors de continuer le dévissage jusqu'à la désolidarisation du filtre 2 vis-à-vis du bloc hydraulique 1.

Selon un aspect particulier de l'invention, le guide 104 forme également un siège 130 pour un clapet 131 monté coulissant axialement sur une colonne 132 coaxiale, avec interposition d'un joint d'étanchéité 136. Comme cela est visible à la figure 1, le clapet 131 est repoussé contre le siège 130 par un ressort 133. Le clapet 131 et la colonne 132 sont creux et définissent donc un premier chemin hydraulique qui mène depuis l'intérieur de la cartouche 4 jusqu'à un premier port 140 du bloc hydraulique 1. Quant à l'extérieur du clapet 131 et l'extérieur de la colonne 132, ils définissent un second chemin hydraulique menant à un second port 141 du bloc hydraulique 1, ce chemin étant fermé lorsque le clapet 131 est en appui contre le siège 130.

Comme cela est visible à la figure 4, lorsque le filtre 2 est en place sur le bloc hydraulique 1, le clapet 131 est repoussé à l'encontre du ressort 133 par un chapeau 134 qui coiffe la cartouche 4 et qui comporte une tête 150 munie d'un joint d'étanchéité 135 qui s'engage à étanchéité dans le creux du clapet 131. On met ainsi en relation :
- l'intérieur de la cartouche 4 avec le premier port 140 via l'intérieur du clapet 131 et de la colonne 132 ;
- l'extérieur de la cartouche 4 avec le second port 141 via l'extérieur du clapet 131 et de la colonne 132, le clapet 131 étant éloigné du siège 130.

Lorsque l'on retire le filtre 2 du bloc hydraulique 1, le clapet 131 est repoussé contre le siège 130, de sorte que le clapet 131 empêche le fluide arrivant du second port 141 de s'écouler vers l'extérieur.

L'invention n'est pas limitée à ce qui vient d'être décrit, mais bien au contraire englobe toute variante entrant dans le cadre défini par les revendications.

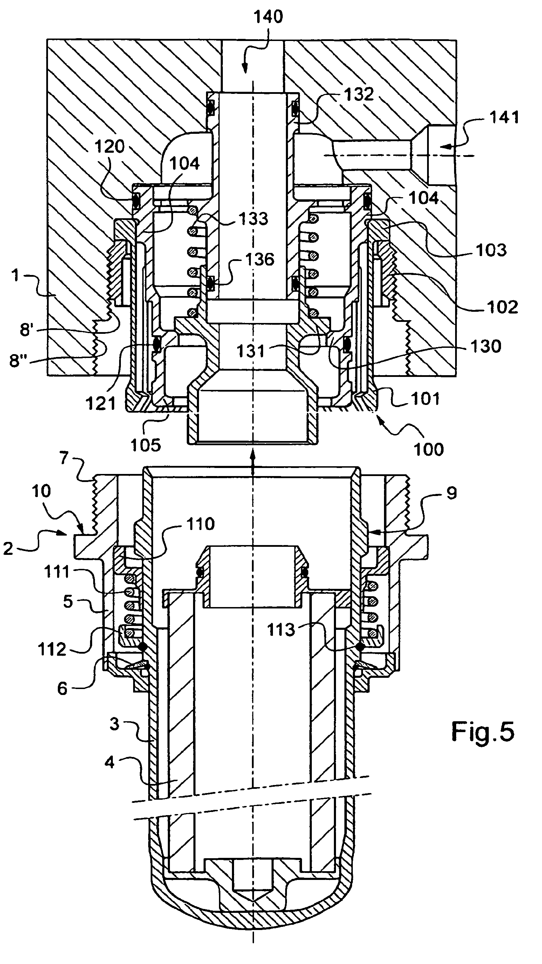

En particulier, bien que l'on ait illustré un dispositif de filtrage dans lequel le taraudage qui reçoit l'écrou de fixation des moyens de retenue et celui qui reçoit le filtre sont les mêmes, on pourra prévoir deux taraudages distincts, réalisés sur deux diamètres étagés et coaxiaux. Une telle disposition est illustrée à la figure 5, sur laquelle on distingue deux filetages distincts 8' et 8".

En outre, bien que l'on ait illustré un organe de fixation (l'écrou 102) distinct de l'organe de retenue (la griffe 101), on pourra prévoir que l'organe de retenue et l'organe de fixation soient en une pièce, de sorte que l'organe de retenue est vissé sur le bloc hydraulique. De plus, bien que l'on ait illustré l'organe de retenue comme comprenant une griffe, on pourra envisager tout autre organe de retenue axiale, comme par exemple un organe à cliquets, à segments, ou toute autre réalisation équivalente.

## Revendications

1. Dispositif de filtrage comprenant un bloc hydraulique (1) et un filtre amovible (2) vissé dans un premier taraudage (8, 8') du bloc hydraulique, **caractérisé en ce que** le bloc hydraulique reçoit un organe de retenue (101) adapté à retenir axialement le filtre lorsque celui-ci est vissé sur le bloc hydraulique, le bloc hydraulique comportant un deuxième taraudage (8 ; 8") coaxial au premier taraudage qui reçoit un organe de fixation (102) de l'organe de retenue sur le bloc hydraulique.

2. Dispositif de filtrage selon la revendication 2, dans lequel le premier taraudage et le second taraudage forment respectivement l'entrée et le fond d'un même taraudage (8).

3. Dispositif de filtrage selon la revendication 1, dans lequel l'organe de retenue comprend une griffe (101) disposée pour coopérer avec un redan (9) d'une cuve du filtre (2) lorsque le filtre est en position sur le bloc hydraulique (1).

4. Dispositif de filtrage selon la revendication 3, dans lequel la griffe (101) comporte une base venant en appui contre un épaulement du bloc hydraulique (1), l'organe de fixation comportant un écrou (102) venant immobiliser la griffe contre cet épaulement.

5. Dispositif de filtrage selon la revendication 3, dans lequel le filtre comporte une virole (5) montée à rotation autour de la cuve, la virole comportant un filetage pour son engagement dans le premier taraudage du bloc hydraulique de sorte que lors de la mise en place du filtre sur le bloc hydraulique, la virole est tournée pour être vissée, alors que la cuve ne tourne pas.

## Claims

1. A filter device comprising a hydraulic block (1) and a removable filter (2) that is screwed into a first internal thread (8, 8') of the hydraulic block, the device being **characterized in that** the hydraulic block receives a retaining member (101) suitable for retaining the filter axially when the filter is screwed to the hydraulic block, the hydraulic block including a second internal thread (8; 8") that is coaxial with the first internal thread and that receives a fastener member (102) for fastening the retaining member to the hydraulic block.

2. A filter device according to claim 1, wherein the first internal thread and the second internal thread form respectively the entry and the inner end of a single internal thread (8).

3. A filter device according to claim 1, wherein the retaining member comprises a catch (101) disposed to cooperate with a step (9) of a vessel for the filter (2) when the filter is in position on the hydraulic block (1).

4. A filter device according to claim 3, wherein the catch (101) includes a base that comes to bear against a shoulder of the hydraulic block (1), the fastener member including a nut (102) that holds the catch stationary against said shoulder.

5. A filter device according to claim 3, wherein the filter includes a bushing (5) mounted to turn relative to the vessel, the bushing having an external thread enabling it to be engaged in the first internal thread of the hydraulic block such that while the filter is being put into place on the hydraulic block, the bushing is turned for screw-fastening purposes while the vessel does not turn.

## Patentansprüche

1. Filtervorrichtung, umfassend einen Hydraulikblock (1) und einen lösbaren Filter (2), der in ein erstes Innengewinde (8, 8`) des Hydraulikblocks geschraubt wird, **dadurch gekennzeichnet, dass** der Hydraulikblock ein Halteelement (101) aufnimmt, das dazu geeignet ist, den Filter axial zurückzuhalten, wenn dieser an den Hydraulikblock geschraubt ist, wobei der Hydraulikblock ein zweites Innengewinde (8; 8") umfasst, das koaxial zum ersten Innengewinde ist und ein Befestigungselement (102) zum Befestigen des Halteelements an dem Hydraulikblock aufnimmt.

2. Filtervorrichtung nach Anspruch 1, wobei das erste Innengewinde und das zweite Innengewinde den Eingang bzw. den Boden ein und desselben Innengewindes (8) bilden.

3. Filtervorrichtung nach Anspruch 1, wobei das Halteelement eine Klaue (101) umfasst, die so angeordnet ist, dass sie mit einem Vorsprung (9) eines Behälters des Filters (2) zusammenwirkt, wenn der Filter an dem Hydraulikblock (1) in Position ist.

4. Filtervorrichtung nach Anspruch 3, wobei die Klaue (101) eine Basis umfasst, die an einer Schulter des Hydraulikblocks (1) zur Anlage kommt, wobei das Befestigungselement eine Mutter (102) umfasst, die die Klaue an dieser Schulter blockiert.

5. Filtervorrichtung nach Anspruch 3, wobei der Filter einen Ring (5) umfasst, der drehbar um den Behälter gelagert ist, wobei der Ring ein Außengewinde für seinen Eingriff mit dem ersten Innengewinde des Hydraulikblockes umfasst, derart, dass beim Platzieren des Filters an dem Hydraulikblock der Ring gedreht wird, um festgeschraubt zu werden, während sich der Behälter nicht dreht.
